(19) **Europäisches Patentamt** / **European Patent Office** / **Office européen des brevets**

(11) **EP 4 733 443 A1**

(12) **EUROPEAN PATENT APPLICATION**
published in accordance with Art. 153(4) EPC

(43) Date of publication:
**29.04.2026 Bulletin 2026/18**

(21) Application number: **23941831.2**

(22) Date of filing: **23.06.2023**

(51) International Patent Classification (IPC):
**C25B 9/00** *(2021.01)*    **C25B 1/04** *(2021.01)*
**C25B 11/052** *(2021.01)*

(52) Cooperative Patent Classification (CPC):
**C25B 1/04; C25B 9/00; C25B 11/052;** Y02E 60/36

(86) International application number:
**PCT/JP2023/023431**

(87) International publication number:
**WO 2024/262045 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Panasonic Intellectual Property Management Co., Ltd.**
**Kadoma-shi, Osaka 571-0057 (JP)**

(72) Inventors:
• **MURASE, Hideaki**
**Kadoma-shi, Osaka 571-0057 (JP)**

• **NAKAUE, Takayuki**
**Kadoma-shi, Osaka 571-0057 (JP)**
• **HAYASHI, Takao**
**Kadoma-shi, Osaka 571-0057 (JP)**
• **ASAZAWA, Koichiro**
**Kadoma-shi, Osaka 571-0057 (JP)**
• **KANI, Yukimune**
**Kadoma-shi, Osaka 571-0057 (JP)**

(74) Representative: **Eisenführ Speiser Patentanwälte Rechtsanwälte PartGmbB**
**Gollierstraße 4**
**80339 München (DE)**

(54) **WATER ELECTROLYSIS CELL ELECTRODE, WATER ELECTROLYSIS CELL, WATER ELECTROLYSIS DEVICE, AND METHOD FOR PRODUCING WATER ELECTROLYSIS CELL ELECTRODE**

(57)     An electrode 1 for water electrolysis cell includes a conductive base 10, a first layer 11, and a second layer 12. The conductive base 10 includes a transition metal. The first layer 11 is disposed on the conductive base 10, and includes two or more transition metals and oxygen. The second layer 12 is disposed on the first layer 11 and includes a layered double hydroxide (LDH) including two or more transition metals. The first layer 11 is disposed between the conductive base 10 and the second layer 12 in a thickness direction of the first layer 11. The first layer 11 includes a first transition metal that is the same as the transition metal included in the conductive base 10, and a second transition metal that is the same as the transition metal included in the second layer 12 and different from the first transition metal. The first transition metal exists in the first layer 11 at a concentration higher than a concentration of the first transition metal in the second layer 12.

FIG.1

EP 4 733 443 A1

**Description**

TECHNICAL FIELD

The present disclosure relates to an electrode for water electrolysis cell, a water electrolysis cell, a water electrolysis device, and a method for manufacturing an electrode for water electrolysis cell.

BACKGROUND ART

In recent years, there has been an expectation for development of electrodes to be used in water electrolysis devices.

Patent Literature 1 describes an electrode for electrolysis of water, the electrode including an electrode substrate as a nickel foam on which NiO and a layered double hydroxide of Ni and Fe are formed.

Patent Literature 2 describes an anode for oxygen evolution. In this anode for oxygen evolution, a catalyst layer composed of NiFe-ns (nanosheet) is formed on a surface of a predetermined intermediate. The intermediate includes an intermediate layer having a composition of $Li_{0.5}Ni_{1.5}O_2$, which is formed on a surface of an anode substrate being a nickel-expanded mesh.

In Non Patent Literature 1, activity of oxygen evolution reaction (OER) of a Ni-Fe layered double hydride (Ni-Fe LDH) electrode is examined.

In Non Patent Literature 2, it is described that the local electronic structure of Ni-Fe LDH is adjusted by an interfacial interaction between FeOOH and the Ni-Fe LDH, which enhances the OER electrode-catalytic activity. In an alkaline water electrolysis, outflow of an electrode catalyst or an electrode substrate from the electrode is an issue, where the outflow is caused by redox of the electrode substrate and the electrode due to a reverse current generated by a repeated operation-suspension cycle.

CITATION LIST

Patent Literature

> Patent Literature 1: JP 2020-12171 A
> Patent Literature 2: JP 2021-139027 A

Non Patent Literature

> Non Patent Literature 1: Seyeong Lee et al, "Operational durability of three-dimensional Ni-Fe layered double hydroxide electrocatalyst for water oxidation," ElectrochimicaActa, 2019, Vol. 315, p. 94-101
> Non Patent Literature 2: Jiande Chen et al, "Interfacial Interaction between FeOOH and Ni-Fe LDH to Modulate the Local Electronic Structure for Enhanced OER Electrocatalysis," ACS Catalysis, 2018, Vol. 8, p. 11342-11351

SUMMARY OF INVENTION

Technical Problem

The description in the above literatures need to be reconsidered from the viewpoint of durability of the electrodes used in the water electrolysis devices. Therefore, the present disclosure provides a novel electrode for water electrolysis cell, the electrode being advantageous from the viewpoint of durability.

Solution to Problem

The present disclosure provides an electrode for water electrolysis cell, where the electrode includes:

> a conductive base including a transition metal;
> a first layer including two or more transition metals and oxygen; and
> a second layer including a layered double hydroxide including two or more transition metals, wherein

the first layer is disposed between the conductive base and the second layer in a thickness direction of the first layer, the first layer includes a first transition metal that is the same metal as the transition metal included in the conductive base and a second transition metal that is the same metal as the transition metal included in the second layer and different from the first transition metal; and

the first transition metal exists in the first layer at a concentration higher than a concentration of the first transition metal in the second layer.

Advantageous Effects of Invention

According to the present disclosure, it is possible to provide a novel electrode for water electrolysis cell, the electrode being advantageous from the viewpoint of durability.

BRIEF DESCRIPTION OF DRAWINGS

FIG. 1 is a cross-sectional view schematically showing an electrode for water electrolysis cell according to a first embodiment.
FIG. 2 is a diagram schematically showing an example of a crystal structure of a layered double hydroxide (LDH).
FIG. 3 is a diagram schematically showing a mechanism in manufacturing the electrode for water electrolysis cell according to the first embodiment.
FIG. 4 is a cross-sectional view schematically showing an example of a water electrolysis cell according to a second embodiment.
FIG. 5 is a cross-sectional view schematically showing an example of a water electrolysis device according to a third embodiment.
FIG. 6A is a cross-sectional view schematically showing an example of an electrode for water electrolysis cell according to a fourth embodiment.
FIG. 6B is a cross-sectional view schematically showing another example of an electrode for water electrolysis cell.
FIG. 7 is a cross-sectional view schematically showing an example of a water electrolysis device according to a fifth embodiment.
FIG. 8 is a transmission electron microscope (TEM) image of an electrode according to Example 1.
FIG. 9A is a TEM image showing a part in the electrode according to Example 1, for which a result of an electron diffraction analysis was obtained.
FIG. 9B is an electron diffraction image obtained by TEM for the part of the electrode shown in FIG. 9A.
FIG. 10 is a graph showing a result of line analysis of the electrode according to Example 1, obtained by an energy dispersive X-ray spectroscopy using TEM (TEM-EDX).
FIG. 11 is a TEM image of an electrode according to Comparative Example 3.
FIG. 12A is a TEM image showing a part in the electrode according to Comparative Example 3, for which a result of an electron diffraction analysis was obtained.
FIG. 12B is an electron diffraction image obtained by TEM for the part of the electrode shown in FIG. 12A.
FIG. 13 is a graph showing a result of TEM-EDX line analysis of the electrode according to Comparative Example 3.
FIG. 14 is a graph showing a relation between an OER overpotential and the number of cycles for an electrode according to Example 1 and electrodes according to Comparative Examples 2 and 3.

DESCRIPTION OF EMBODIMENTS

(Findings on which the present disclosure is based)

Use of renewable energy sources such as solar power and wind power has been attracting attention as a measure against global warming. Power generation using such renewable energy sources may lead to a problem of surplus electricity being wasted. For this reason, the efficiency of renewable energy use is not necessarily sufficient. Therefore, methods of making effective use of surplus electricity by producing and storing hydrogen using surplus electricity are being considered.
Electrolysis of water is a possible method for producing hydrogen using surplus electricity. In order to produce hydrogen affordably and stably, there is a demand for development of a highly efficient, long-life water electrolysis device.
In a water electrolysis device, oxygen is evolved at the anode and hydrogen is evolved at the cathode. The reaction in which oxygen is evolved at the anode may be called an anode reaction, and the reaction in which hydrogen is evolved at the cathode may be called a cathode reaction. In order to provide a highly efficient water electrolysis device, it is desirable that the overpotential is low, especially at the anode. In addition, it is desirable that the overpotential is low at the cathode as well. Therefore, there is a demand for development of a high-performance electrode for the anode reaction or the cathode reaction of water electrolysis.

For example, an LDH is considered to be a promising material for electrodes for water electrolysis cell from the viewpoint of its large specific surface area and various combinations of metal ions. In this case, it is thought that the LDH can be supported on a base having electric conductivity. For example, as described in Patent Literature 1 or the like, it is conceivable to support the LDH on a base such as nickel foam. However, this technique may need to be reconsidered from the viewpoint of durability with regard to electrode reaction in water-splitting. As a result of diligent studies, the inventors have newly discovered that the durability of electrode for water electrolysis cell is enhanced by the presence of a predetermined layer between the layer including the LDH and the conductive base, and the inventors have completed an electrode for water electrolysis cell of the present disclosure.

Embodiments of the present disclosure are described below with reference to the attached drawings. The present disclosure is not limited to the following embodiments. The embodiments described below are all intended to provide comprehensive or specific examples. Therefore, the numerical values, the shapes, the materials, the components, the arrangement or the positions of the components, the connection forms or the like shown in the following embodiments are simply intended to demonstrate examples, but are not intended to limit the present disclosure. Among the components in the following embodiments, the components that are not described in the independent claims indicating the highest-level concept are described as optional components. Descriptions of components with the same reference numerals in the drawings may be omitted. The drawings show each component schematically to facilitate understanding, so that the shapes, the dimensional ratios and the like may not be accurately depicted.

(First embodiment)

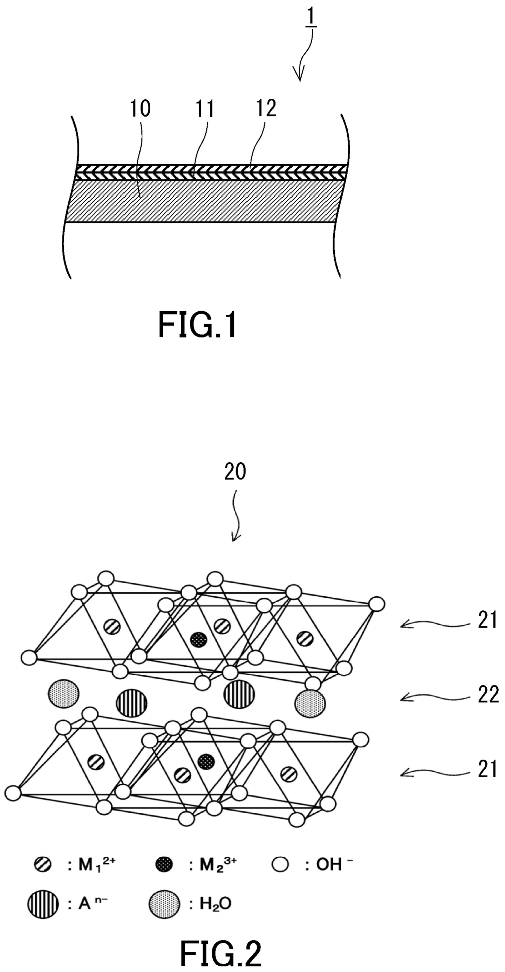

FIG. 1 is a schematic cross-sectional view of an electrode for water electrolysis cell according to a first embodiment. As shown in FIG. 1, the electrode 1 for water electrolysis cell includes a conductive base 10, a first layer 11, and a second layer 12. The first layer 11 is disposed between the conductive base 10 and the second layer 12 in its thickness direction. The conductive base 10 includes a transition metal. The first layer 11 is disposed on the conductive base 10 and includes two or more transition metals and oxygen. The second layer 12 is disposed on the first layer 11 and includes layered double hydroxide (LDH) including two or more transition metals. The first layer 11 includes a first transition metal that is the same as the transition metal in the conductive base 10 and a second transition metal that is the same as the transition metal in the second layer 12 and different from the first transition metal. The first transition metal exists in the first layer 11 at a concentration higher than a concentration of the first transition metal in the second layer 12. As shown in FIG. 1, the first layer 11 is provided between the conductive base 10 and the second layer 12 including the LDH in the thickness direction of the first layer 11. Specifically, the second layer 12 including the LDH is bonded to the conductive base 10 by means of the first layer 11. This makes it easy for the second layer 12 to be firmly fixed to the conductive base 10, whereby the electrode 1 for water electrolysis cell is more likely to exhibit high durability.

In the electrode 1 for water electrolysis cell, the thickness of the first layer 11 is not limited to a specific value. For example, the first layer 11 has a thickness of 10 nm or less. Thereby, the electrode 1 for water electrolysis cell is likely to exhibit high durability and the electrode 1 is likely to have high electrode activity. The thickness of the first layer 11 can be determined, for example, by performing a TEM-EDX line analysis in a region including the second layer 12, the first layer 11, and the conductive base 10 in a TEM image of the cross-section of the electrode 1 for water electrolysis cell. The thickness of the first layer 11 can be determined by noting the counts of the first transition metal, the second transition metal, and the oxygen in the TEM-EDX line analysis results. The thickness of the first layer 11 is, for example, 1 nm or more.

In the electrode 1 for water electrolysis cell, the first transition metal and the second transition metal are not limited to particular metals. The first transition metal is, for example, Ni. The second transition metal is, for example, a transition metal selected from the group consisting of V, Cr, Mn, Fe, Co, Cu, W, and Ru. With this configuration, the electrode 1 for water electrolysis cell is more likely to exhibit high durability while having high electrode activity.

In the electrode 1 for water electrolysis cell, the second transition metal is preferably Fe. In this case, the electrode 1 for water electrolysis cell is more likely to have high electrode activity and to exhibit high durability. In addition, the cost for manufacturing the electrode 1 for water electrolysis cell can be easily reduced.

The conductive base 10 is not limited to a specific base as long as it includes a first transition metal and has electric conductivity. The conductive base 10 may include a metal other than the first transition metal, or it may include a resin. The entire conductive base 10 may be composed of a metal. The conductive base 10 may have a structure in which a surface layer including a metal is formed on a member of a resin such as polypropylene or polyethylene. In this case, the surface layer including the metal may be a plated film or a sputtered film. The metal included in the conductive base 10 may be a pure metal such as nickel, or an alloy such as stainless steel or Inconel. Inconel is a registered trademark.

The surface of the conductive base 10 preferably includes at least one selected from the group consisting of nickel and nickel oxide. In this case, the conductive base 10 is likely to have high alkali resistance. In the case where the surface of the conductive base 10 includes at least one selected from the group consisting of nickel and nickel oxide, the conductive base 10 may be entirely composed of nickel. The conductive base 10 may have a surface layer including at least one selected from the group consisting of nickel and nickel oxide. The surface layer is, for example, a sputtered film or a plated film.

In the case where the surface of the conductive base 10 includes at least one selected from the group consisting of nickel and nickel oxide, the nickel and nickel oxide may have a predetermined orientation.

The shape of the conductive base 10 is not limited to a specific shape. The conductive base 10 may have, for example, a non-porous structure such as a plate or a foil, or may have a porous structure, such as a mesh, a foamed body and a non-woven fabric. The conductive base 10 may be composed of particles such as metal particles. The conductive base 10 preferably has a porous structure. In this case, the surface area of the conductive part of the conductive base 10 is likely to increase, and the electrode 1 for water electrolysis cell is likely to have high electrode activity. In addition, escape of gas evolved during the water electrolysis reaction can be prevented easily.

The thickness of the conductive base 10 is not limited to a specific value. The conductive base 10 is, for example, 0.02 mm or more in thickness. In this case, the conductive base 10 can be handled easily. The thickness of the conductive base 10 is, for example, 10 mm or less.

As described above, the second layer 12 includes the LDH. FIG. 2 is a diagram schematically showing an example of the crystal structure of the LDH. An LDH 20 has activity for the generation of gases such as hydrogen and oxygen at the anode or the cathode of a water electrolysis cell. For example, in an alkaline water electrolysis, the LDH 20 can be converted into hydroxide through a water electrolysis reaction.

The LDH 20 has a composition represented by the following Formula (1), for example. In Formula (1), $M1^{2+}$ is a divalent transition metal ion. $M2^{3+}$ is a trivalent transition metal ion. $A^{n-}$ is an interlayer anion. x is a rational number that satisfies a requirement $0 < x < 1$. y is a number that corresponds to the required amount of charge balance. n is an integer. And m is a suitable rational number.

$$[M1^{2+}_{1-x}M2^{3+}_{x}(OH)_2][yA^{n-}\cdot mH_2O] \qquad \text{Formula (1)}$$

The two or more transition metals in the LDH 20 are not limited to specific transition metals. In other words, M1 and M2 in the composition shown in Formula (1) are not limited to specific transition metals. The two or more transition metals include, for example, at least two selected from the group consisting of V, Cr, Mn, Fe, Co, Ni, Cu, W, and Ru. In this case, the electrode 1 for water electrolysis cell is likely to have high electrode activity.

The two or more transition metals in the LDH 20 include Ni and Fe, for example. In the composition shown in Formula (1), for example, M1 may be Ni and M2 may be Fe. In this case, the electrode 1 for water electrolysis cell is more likely to have high electrode activity.

$A^{n-}$ as an interlayer anion may be an inorganic ion or an organic ion. Examples of the inorganic ion include $CO_3^{2-}$, $NO_3^-$, $Cl^-$, $SO_4^{2-}$, $Br^-$, $OH^-$, $F^-$, $I^-$, $Si_2O_5^{2-}$, $B_4O_5(OH)_4^{2-}$, and $PO_4^{3-}$. Examples of the organic ion include $CH_3(CH_2)_nSO^{4-}$, $CH_3(CH_2)_nCOO^-$, $CH_3(CH_2)_nPO^{4-}$, and $CH_3(CH_2)_nNO^{3-}$. $A^{n-}$ can be inserted between layers of metal hydroxide together with water molecules. The charge and ion size of $A^{n-}$ are not limited to specific values. The LDH 20 may include one kind of $A^{n-}$ or multiple kinds of $A^{n-}$.

As shown in FIG. 2, the LDH 20 has an $OH^-$ ion at each vertex of each octahedron centered on $M1^{2+}$ or $M2^{3+}$. The LDH 20 includes a layer of metal hydroxide represented by $[M1^{2+}_{1-x}M2^{3+}_{x}(OH)_2]^{X+}$. The metal hydroxide layer has a layered structure in which the octahedra of the hydroxide share edges are linked in two dimensions. Between the layers of the metal hydroxide, the anion $A^{n-}$ and water molecules are present. The layers of the metal hydroxide function as host layers 21, while a guest layer 22 including the anion $A^{n-}$ and water molecules is arranged between the host layers 21. In other words, the LDH 20 as a whole has a sheet-like structure in which the host layers 21 of the metal hydroxide and the guest layer 22 of the anion $A^{n-}$ and water molecules are laminated alternately. The LDH 20 has a structure in which some of $M1^{2+}$ included in the metal hydroxide layer is replaced by $M2^{3+}$.

The second layer 12 may include a chelating agent. The chelating agent may coordinate with the transition metal ions included in the LDH 20. Thereby in formation of the second layer 12, the LDH 20 is likely to be synthesized to have a small particle diameter. As a result, the specific surface area of the LDH 20 is likely to increase, and thus, the electrode 1 for water electrolysis cell is likely to have high electrode activity. The chelating agent is a ligand with multiple coordination sites, i.e., a multidentate ligand.

The chelating agent is not limited to a specific chelating agent. The chelating agent is, for example, an organic compound capable of coordinating with a transition metal ion in the LDH 20. The chelating agent may be at least one selected from the group consisting of a bidentate organic ligand and a tridentate organic ligand. Examples of the chelating agents include β-diketone, β-ketoester, hydroxycarboxylic acid, and hydroxycarboxylate. Examples of the β-diketones include acetylacetone (ACAC), trifluoroacetylacetone, hexafluoroacetylacetone, benzoylacetone, tenoyl trifluoroacetone, dipyrrovalyl methane, dibenzoylmethane, and ascorbic acid. Examples of the β-keto esters include methyl acetoacetate, ethyl acetoacetate, allyl acetoacetate, benzyl acetoacetate, n-propyl acetoacetate, iso-propyl acetoacetate, n-butyl acetoacetate, iso-butyl acetoacetate, tert-butyl acetoacetate, 2-methoxyethyl acetoacetate, and methyl 3-oxopentanoate. Examples of the hydroxycarboxylic acids and their salts include tartaric acid, citric acid, malic acid, gluconic acid, ferulic acid, lactic acid, glucuronic acid, and their salts.

The chelating agent preferably includes at least one selected from the group consisting of acetylacetone and a citrate. In this case, the electrode 1 for water electrolysis cell is more likely to have high electrode activity. An example of the citrate is trisodium citrate.

The thickness of the second layer 12 is not limited to a specific value. The second layer 12 has a thickness of 35 nm or more, for example. With this configuration, the electrode 1 for water electrolysis cell is more likely to have high electrode activity. The second layer 12 includes a part having a thickness of 35 nm or more, for example. The thickness of the second layer 12 can be determined by, for example, a TEM observation of a cross-section of the electrode 1 for water electrolysis cell. The thickness of the second layer 12 is, for example, 210 nm or less.

The second layer 12 covers, for example, a surface of the conductive base 10. A coverage of the second layer 12 on the surface of the conductive base 10 is not limited to a specific value. The coverage is preferably 99% or more. In this case, the electrode 1 for water electrolysis cell is likely to have high electrode activity. In addition, the electrode 1 for water electrolysis cell is likely to have high durability. The coverage can be determined, for example, in accordance with the method described in Examples.

The method for manufacturing the electrode 1 for water electrolysis cell is not limited to a specific method. The electrode 1 for water electrolysis cell can be manufactured in accordance with a method including the following steps (I) and (II), for example.

(I) Promoting mixing of a solution S in which a conductive base 10 including a first transition metal is immersed, where the solution S includes a chloride ion and a second transition metal different from the first transition metal.
(II) Forming a layer including LDH including the second transition metal and a third transition metal different from the second transition metal on a surface of the conductive base 10.

In the step (I), there can be an interaction between the first transition metal included in the conductive base 10 and the second transition metal and chloride included in the solution S. This facilitates formation of a layer to firmly fix the layer including LDH formed in the step (II) to the conductive base 10. As a result, the electrode 1 for water electrolysis cell is likely to exhibit high durability.

The promoting of mixing of the solution S in the step (I) can be performed, for example, by vibrating the conductive base 10, shaking the container in which the solution S and the conductive base 10 are enclosed, or stirring the solution S using a stirrer piece and a stirrer. With this method, a forced convection of the solution S occurs, and mixing of the solution S can be promoted.

The temperature of the solution S in the step (I) is not limited to a specific temperature. For example, the temperature of the solution S in the step (I) is 20°C $\pm$ 15°C. In this case, an electrode 1 for water electrolysis cell having high electrode activity can be obtained easily.

The solvent of the solution S may be water, an organic solvent, or a mixture of water and an organic solvent.

The solution S may further include, for example, a chelating agent. Thereby, the LDH 20 being synthesized in the step (II) is likely to have a small particle size, and the specific surface area of the LDH 20 is likely to increase. The electrode 1 for the water electrolysis cell is more likely to have high electrode activity.

In the case where the solution S includes a chelating agent, the solution S may further include a third transition metal. In this case, a complex formed by the third transition metal and the chelating agent included in the solution S may contribute to the synthesis of LDH 20.

In the case where the solution S includes a chelating agent, the third transition metal may be the same transition metal as the first transition metal. In this case, the method for manufacturing the electrode 1 for water electrolysis cell can be simplified.

The chelating agent included in the solution S may be selected with reference to the above examples of the chelating agents to be included in the second layer 12. The chelating agent included in the solution S preferably includes at least one selected from the group consisting of acetylacetone and a citrate. This improves the dispersion stability of the complex in the solution S, and facilitates formation of the second layer 12 in the electrode 1 for water electrolysis cell in the desired state. As a result, the electrode 1 for water electrolysis cell is more likely to have high electrode activity.

In the step (II), the method of forming a layer including the LDH is not limited to a specific method. The layer including the LDH can be formed, for example, by adjusting the solution S to be alkaline. Thereby, the electrode 1 for water electrolysis cell is more likely to exhibit high durability.

The method of adjusting the solution S to be alkaline is not limited to a specific method. For example, the solution S may be adjusted to be alkaline by mixing the above solution S with an alkaline solution. Alternatively, the solution may be adjusted to be alkaline by adding a pH booster to the solution. In this case, the pH booster is not limited to a specific compound. The pH booster is, for example, a compound having an epoxy group. Examples of the pH booster include propylene oxide, ethylene oxide, and butylene oxide.

When a pH booster having an epoxy group such as propylene oxide is added to the solution S, in the presence of a nucleophile such as a chloride ion, the pH booster can capture hydrogen ions present in the solution S, following the ring-opening reaction of the epoxy group. As a result, the pH of the solution S rises, and the solution S can be alkaline. The pH of the solution S is 1, for example. When the pH booster is added to the solution S, the pH of the solution S rises gradually from 1, for example, and eventually the solution S can be alkaline. The final pH of the solution S is, for example, in a range of 8 to 12. Addition of the pH booster to the solution promotes the reaction in which hydrogen ions in the solution S is captured. Thereby, the pH of the solution S gradually rises. The time period from the addition of the pH booster to the solution S until the pH of the solution S reaches a steady state is not limited to a specific time period. That time period can be, for example, more than 24 hours, or several days.

The temperature of the solution S when adjusting the solution S to be alkaline is not limited to a specific temperature. The temperature of the solution S is, for example, room temperature $20°C \pm 15°C$. In this case, an electrode 1 for water electrolysis cell with high electrode activity can be obtained easily.

In the above-mentioned manufacturing method, the first transition metal and the second transition metal are not limited to specific transition metals. For example, the first transition metal is Ni and the second transition metal is a transition metal selected from the group consisting of V, Cr, Mn, Fe, Co, Ni, Cu, W, and Ru. In this case, an electrode for water electrolysis cell, which is more likely to exhibit high durability while having high electrode activity, can be manufactured easily.

The second transition metal ion is preferably an Fe ion. In this case, an electrode for water electrolysis cell, which is more likely to exhibit high durability while having high electrode activity, can be manufactured easily.

In the case where the first transition metal is Ni and the second transition metal is Fe, for example, the reaction represented by the following Formula (2) can occur in the step (I). As a result, the conductive base 10 can be etched. In addition, in the step (I), it is considered that $Fe^{3+}$ included in the solution S can diffuse near the surface of the conductive base 10 to form a layer including Ni, Fe, and oxygen on the surface of the conductive base 10 together with some of $Fe^{3+}$ and $Ni^{2+}$ and oxygen. A layer including the LDH is then formed on this layer in the step (II). The thus obtained electrode 1 for water electrolysis cell includes a layer including Ni, Fe and oxygen formed between the conductive base 10 and the layer including the LDH.

$$4Ni^{2+} Cl^-_2 + 2Fe^{3+} Cl^-_3 + 2Ni \rightarrow 5Ni^{2+} Cl^-_2 + 2Fe^{2+} Cl^-_2 + 1Ni \qquad \text{Formula (2)}$$

In the case where the first transition metal is Ni and the second transition metal is Fe, in manufacturing the electrode 1 for water electrolysis cell, a molar ratio of a content of Fe ion to a content of Ni included in the conductive base 10 is not limited to a specific value. For example, the molar ratio is 0.75 or less. In this case, it is possible to prevent the nickel included in the conductive base 10 from dissolving to make it difficult to manufacture the electrode 1 for water electrolysis cell, where the dissolution may be caused by the reaction shown by Formula (2).

The molar ratio is preferably in a range of 0.05 to 0.25. In this case, a layer including Ni, Fe and oxygen can be formed easily on the surface of the conductive base 10 in the desired state, and an electrode 1 for water electrolysis cell with high durability can be obtained easily. In addition, the second layer 12 can be easily formed uniformly on the conductive base 10, and an electrode 1 for water electrolysis cell with high electrode activity can be manufactured easily.

In the case where the first transition metal is Ni and the second transition metal is Fe, in manufacturing the electrode 1 for water electrolysis cell, a value obtained by dividing the content of Fe ion on a molar basis by the surface area of the conductive base 10 is not limited to a specific value. For example, this value is $0.29 \text{ mmol/cm}^2$ or less. In this case, it is possible to prevent the nickel included in the conductive base 10 from dissolving to make it difficult to manufacture the electrode 1 for water electrolysis cell, where the dissolution may be caused by the reaction represented by Formula (2).

The above-described value, which is obtainable by dividing the content of Fe ions on a molar basis by the surface area of the conductive base 10, is preferably in a range of $0.01 \text{ mmol/cm}^2$ to $0.1 \text{ mmol/cm}^2$. In this case, a layer including Ni, Fe and oxygen is formed easily on the surface of the conductive base 10 in a desired state, and an electrode 1 for water electrolysis cell having high durability is easily obtained. In addition, the second layer 12 can be easily formed uniformly on the conductive base 10, and an electrode 1 for water electrolysis cell having high electrode activity can be manufactured more easily.

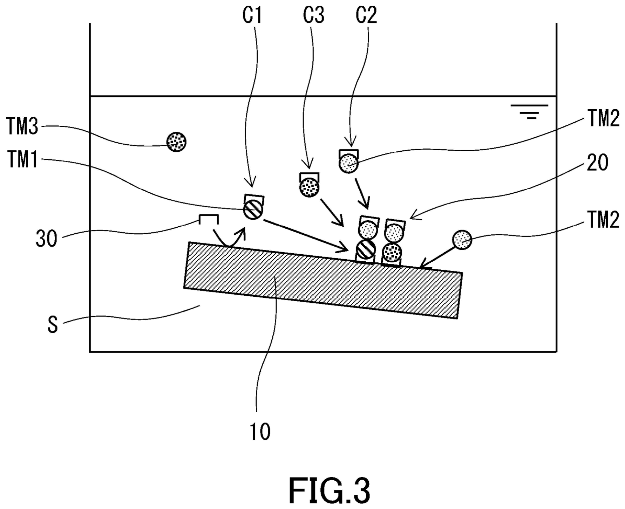

FIG. 3 is a diagram schematically showing an example of a mechanism in manufacturing an electrode for water electrolysis cell according to the first embodiment. As shown in FIG. 3, a conductive base 10 is immersed in a solution S that includes an ion TM2 of a second transition metal, a chloride ion (not shown), an ion TM3 of a third transition metal, and a chelating agent 30. For example, the ion TM2 of the second transition metal is $Fe^{3+}$, and the ion TM1 of the third transition metal is $Ni^{2+}$. The conductive base 10 includes Ni, for example, as the first transition metal. Due to the action of the ion TM2, in the step (I), the ion TM2 of the second transition metal included in the solution S diffuse near the surface of the conductive base 10. As a result, the conductive base 10 is etched, and thus, the first transition metal included in the conductive base 10 is dissolved in the solution S, thereby generating the ion TM1 of the first transition metal derived from the conductive base 10. Since the ion TM2 diffuses near the surface of the conductive base 10, a layer including, for example, Fe, Ni, and oxygen, may be formed to coat the surface of the conductive base 10. Though the ion TM1 and the ion TM3 are both $Ni^{2+}$ in this example, the ion TM1 and the ion TM3 may be different transition metal ions. Some of the chelating agent 30 included in the solution S reacts with the ion TM1 of the first transition metal eluted from the conductive base 10, forming a complex C1 between the ion TM1 of the first transition metal derived from the conductive base 10 and the chelating agent 30. In addition, a complex C2 and a complex C3 are formed, where the complex C2 is formed from the ion TM2 of the second transition metal and the chelating agent 30, while the complex C3 is formed from the ion TM3 of the third transition metal derived from the solution S and the chelating agent 30. Next, when the solution S is adjusted to be alkaline, the complexes C1, C2 and C3 react on the surface of the conductive base 10, whereby the LDH 20 is synthesized to coat the surface of the conductive base 10. Since the complexes C1, C2, and C3 include the chelating agent 30, crystal growth of the LDH 20 is suppressed by the action of the chelating agent 30. As a result, the second layer 12 including the LDH 20 and the chelating agent 30 is formed on the conductive base 10, and an electrode 1 for water electrolysis cell is obtained.

The electrode 1 for water electrolysis cell according to the present embodiment can be used, for example, as an electrode for water electrolysis cell of an alkaline water electrolysis device or an anion-exchange membrane type water electrolysis device. The electrode 1 for water electrolysis cell is used, for example, in at least one selected from the group consisting of the anode and the cathode in the water electrolysis device. Thereby, the activity of the anode reaction or the cathode reaction in a water electrolysis is likely to increase.

(Second embodiment)

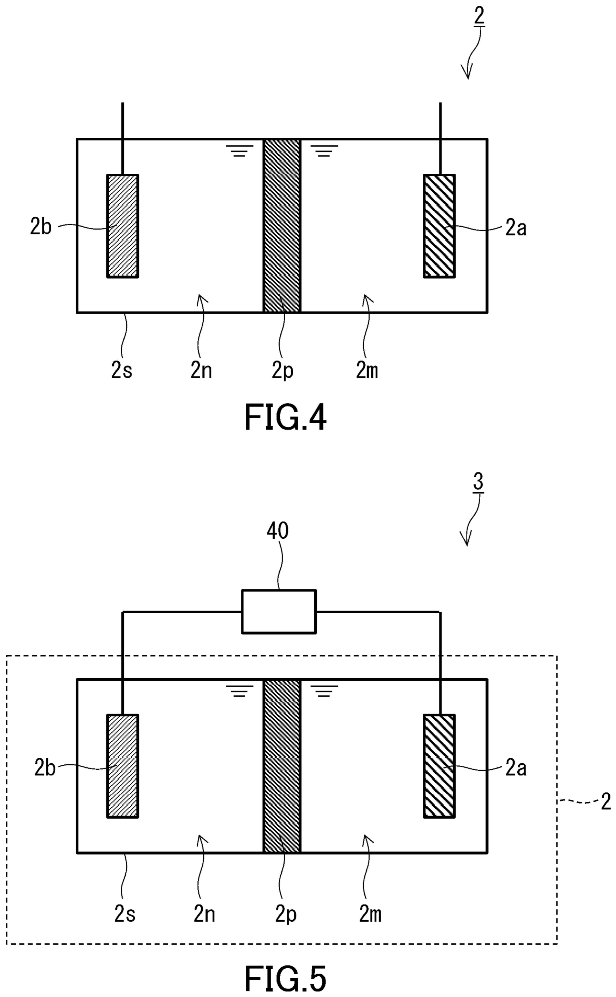

FIG. 4 is a cross-sectional view schematically showing an example of a water electrolysis cell according to a second embodiment. As shown in FIG. 4, a water electrolysis cell 2 includes an anode 2a, a cathode 2b, and a separator 2p. At least one selected from the group consisting of the anode 2a and the cathode 2b includes, for example, the electrode 1 for water electrolysis cell according to the first embodiment. In this case, the activity of the anode reaction or the cathode reaction in the water electrolysis cell 2 is likely to increase, and the anode 2a or the cathode 2b is likely to exhibit high durability.

The water electrolysis cell 2 is, for example, an alkaline water electrolysis cell for which an alkaline aqueous solution is used. The alkaline aqueous solution used in the water electrolysis cell 2 is not limited to a specific alkaline aqueous solution. Examples of the alkaline aqueous solution include a potassium hydroxide aqueous solution and a sodium hydroxide aqueous solution.

As shown in FIG. 4, the water electrolysis cell 2 includes, for example, an electrolytic cell 2s, a first chamber 2m, and a second chamber 2n. The separator 2p is disposed inside the electrolytic cell 2s and separates the interior of the electrolytic cell 2s into the first chamber 2m and the second chamber 2n. The anode 2a is disposed in the first chamber 2m, and the cathode 2b is disposed in the second chamber 2n.

The separator 2p is, for example, a separator for alkaline water electrolysis. The separator 2p is, for example, a sheet-shaped porous membrane. The separator 2p has a thickness, for example, in a range of 100 $\mu$m to 500 $\mu$m and has pores that serve as a passage for ions or an electrolytic solution. Materials for the separator 2p are not limited to a specific material. Examples of the material for the separator 2p include asbestos, polymer-reinforced asbestos, potassium titanate bonded with polytetrafluoroethylene (PTFE), zirconia bonded with PTFE, and antimonic acid and antimony oxide bonded with polysulfone. Other examples of materials for the separator 2p include sintered nickel, nickel coated with ceramics and nickel oxide, and polysulfone. The separator 2p may be Zirfon Perl UTP 500 manufactured by AGFA.

The anode 2a may be arranged in a state of zero gap, namely, in a state where the anode 2a is in contact with the separator 2p, or the anode 2a may be arranged in a state in which there is a gap between the anode 2a and the separator 2p. The cathode 2b may be arranged in a state being in contact with the separator 2p, or the cathode 2b may be arranged in a state in which there is a gap between the cathode 2b and the separator 2p.

The water electrolysis cell 2 electrolyzes an alkaline aqueous solution to produce hydrogen and oxygen. An aqueous solution including a hydroxide of an alkali metal or alkaline earth metal is supplied to the first chamber 2m. **In** addition, an alkaline aqueous solution may be supplied to the second chamber 2n. Electrolysis is carried out while an alkaline aqueous solution of a predetermined concentration is discharged from the first chamber 2m and the second chamber 2n, whereby hydrogen and oxygen are produced.

**In** the case where the anode 2a includes the electrode 1 for water electrolysis cell, the cathode 2b may include, for example, an electrode material known as a cathode for an alkaline water electrolysis cell.

**In** the water electrolysis cell 2, in the case where the cathode 2b includes the electrode 1 for water electrolysis cell, the anode 2a may include the electrode material known as the anode for the alkaline water electrolysis cell. **In** the water electrolysis cell 2, both the anode 2a and the cathode 2b may include the electrode 1 for water electrolysis cell.

With the above configuration, at least one selected from the group consisting of the anode 2a and the cathode 2b includes the electrode 1 for water electrolysis cell, and thus, the water electrolysis cell 2 can exhibit high durability.

(Third embodiment)

FIG. 5 is a cross-sectional view schematically showing an example of a water electrolysis device according to a third embodiment. As shown in FIG. 5, a water electrolysis device 3 includes the water electrolysis cell 2 according to the second embodiment and a voltage applicator 40. The voltage applicator 40 applies a voltage between the cathode 2b and the anode 2a. The water electrolysis device 3 is an alkaline water electrolysis device in which an alkaline aqueous solution is used.

The voltage applicator 40 is electrically connected to the anode 2a and the cathode 2b. The voltage applicator 40 causes the potential of the anode 2a to become higher than the potential of the cathode 2b. The voltage applicator 40 is not limited to a specific type of voltage applicator as long as the voltage applicator 40 is capable of applying a voltage between the anode 2a and the cathode 2b. The voltage applicator 40 may be a device to adjust the voltage applied between the anode 2a and the cathode 2b. **In** the case where the voltage applicator 40 is connected to a direct current power source such as a battery, a solar cell and a fuel cell, the voltage applicator 40 includes a DC/DC converter, for example. **In** the case where the voltage applicator 40 is connected to an alternating current power source such as a commercial power source, the voltage applicator 40 is equipped with an AC/DC converter, for example. The voltage applicator 40 may be an electric power type power source, for example. In the electric power type power source, the voltage to be applied between the anode 2a and the cathode 2b, and the current to flow between the anode 2a and the cathode 2b, are adjusted such that the electric power supplied to the water electrolysis device 3 will be a predetermined set value.

With the above configuration, the water electrolysis device 3 can exhibit high durability.

(Fourth embodiment)

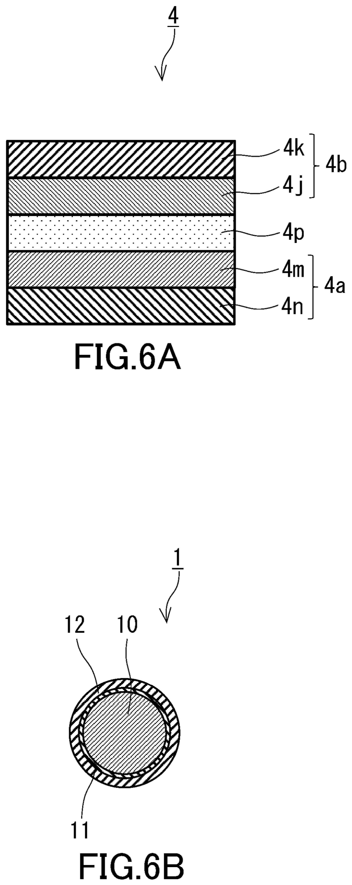

FIG. 6A is a cross-sectional view schematically showing an example of a water electrolysis cell according to a fourth embodiment. As shown in FIG. 6A, a water electrolysis cell 4 includes an anode 4a, a cathode 4b, and an anion-exchange membrane 4p. In the water electrolysis cell 4, at least one selected from the group consisting of the anode 4a and the cathode 4b includes, for example, the electrode 1 for water electrolysis cell according to the first embodiment. In this case, the activity of the anode reaction or the activity of the cathode reaction in the water electrolysis cell 4 is likely to increase, and the anode 4a or the cathode 4b is likely to exhibit high durability.

The water electrolysis cell is, for example, an anion-exchange membrane (AEM) type water electrolysis cell. As shown in FIG. 6A, the anode 4a includes, for example, a catalyst layer 4m and a gas diffusion layer 4n. The cathode 4b includes, for example, a catalyst layer 4j and a gas diffusion layer 4k. The catalyst layer 4m of the anode 4a is in contact with one of the main surfaces of the anion-exchange membrane 4p, and the catalyst layer 4j of the cathode 4b is in contact with the other main surface of the anion-exchange membrane 4p.

The anion-exchange membrane 4p is not limited to a specific type of anion-exchange membrane. The anion-exchange membrane 4p has conductivity for anions such as hydroxide ions. The anion-exchange membrane 4p is capable of preventing mixing of the oxygen gas generated at the anode 4a with the hydrogen gas generated at the cathode 4b. The oxygen gas passes through the gas diffusion layer 4n and is led outside the anode 4a. The hydrogen gas passes through the gas diffusion layer 4k and is led outside the cathode 4b.

In the water electrolysis cell 4, in the case where the anode 4a includes the electrode 1 for water electrolysis cell, the cathode 4b may be a known cathode in an AEM-type water electrolysis cell.

In the water electrolysis cell 4, in the case where the cathode 4b includes the electrode 1 for water electrolysis cell, the anode 4a may be the known anode of the AEM-type water electrolysis cell. In the water electrolysis cell 4, both the anode 4a and the cathode 4b may include the electrode 1 for water electrolysis cell.

With the above configuration, at least one selected from the group consisting of the anode 4a and the cathode 4b includes the electrode 1 for water electrolysis cell, whereby the water electrolysis cell 4 can exhibit high durability.

FIG. 6B shows another example of an electrode 1 for water electrolysis cell in the fourth embodiment. As shown in FIG. 6B, the electrode 1 for water electrolysis cell has a conductive base 10, a first layer 11, and a second layer 12. The first layer 11 is disposed between the conductive base 10 and the second layer 12 in its thickness direction. The conductive base 10 is composed of metal particles for example, and the surfaces of the metal particles composing the conductive base 10 are coated with the second layer 12 including the LDH with the first layer 11 interposed between the second layer 12 and the surface of the metal particles. The entire surfaces of metal particles may be coated with the second layer 12 including the LDH, or only a part of the surfaces of the metal particles may be coated with the second layer 12 including the LDH. The second layer 12 coats, for example, 70% or more of the surfaces of the metal particles composing the conductive base 10. The second layer 12 may coat a large part of the surfaces of the metal particles composing the conductive base 10, specifically 90% or more of the surfaces. The electrode 1 for water electrolysis cell may have a cross-section whose surface is coated with the LDH. In the electrode 1 for water electrolysis cell, the ratio of the mass of the metal particles to the mass of the LDH is not limited to a specific value. The ratio is, for example, 8.0 or less. With the configuration, the electrode 1 for water electrolysis cells is more likely to have high durability.

The metallic particles composing the conductive base 10 include one or more transition metals. Examples of the transition metals include V, Cr, Mn, Fe, Co, Ni, Cu, W, and Ru. The metal particles may include Ni, and the metal particles may be Ni particles. The transition metal included in the metal particles 11 may be the same metal as the two or more transition metals included in the LDH of the second layer 12.

The shape of the metal particles composing the conductive base 10 is not limited to a specific shape. For example, the shape of the metal particles is granular. In the case where the shape of the metal particles is granular, the average particle diameter of the metal particles is not limited to a specific value. The average particle diameter of the metal particles may be 100 nm or less, or may be 50 nm or less. The average particle diameter of the metal particles may be 10 nm or more, or 20 nm or more. The metal particles may, for example, have an average particle size to support a sufficient amount of LDH. As a result, even in the case where a voltage is applied to the electrode 1 for water electrolysis cell, the second layer 12 including the LDH and the metal particles composing the conductive base 10 are less likely to separate, and the electrode 1 for water electrolysis cell will have high durability. In addition, with such a configuration, the electrode 1 for water electrolysis cell can more reliably have high durability, for example, in the anode reaction of water electrolysis. The average particle diameter of the metal particles can be determined, for example, by observing the metal particles with a transmission electron microscope (TEM). Specifically, the average of the maximum and minimum diameters of fifty metal particles observable as a whole is defined as the particle size of each metal particle, and the average particle size can then be determined as the arithmetic mean of the particle sizes.

(Fifth embodiment)

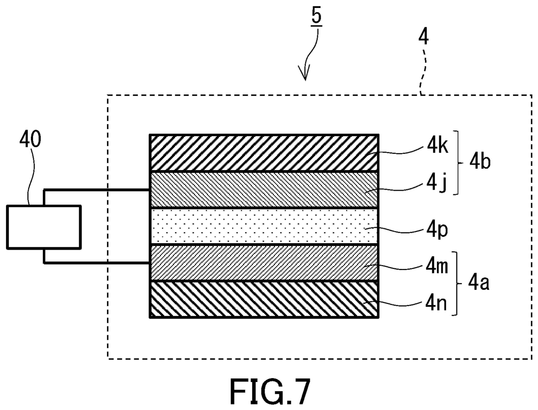

FIG. 7 is a cross-sectional view schematically showing an example of a water electrolysis device according to a fifth embodiment. As shown in FIG. 7, a water electrolysis device 5 includes a water electrolysis cell 4 and a voltage applicator 40. The voltage applicator 40 applies a voltage between a cathode 4b and an anode 4a. The water electrolysis device 5 is, for example, an AEM-type water electrolysis device.

The voltage applicator 40 is electrically connected to the anode 4a and to the cathode 4b. Due to the voltage applicator 40, the potential of the anode 4a becomes higher than the potential of the cathode 4b. The voltage applicator 40 is not limited to a specific type of voltage applicator as long as the voltage applicator 40 is capable of applying a voltage between the anode 4a and the cathode 4b. The voltage applicator 40 may be a device to adjust the voltage applied between the anode 4a and the cathode 4b. In the case where the voltage applicator 40 is connected to a direct current power source such as a battery, solar cell, or fuel cell, the voltage applicator 40 includes a DC/DC converter, for example. In the case where the voltage applicator 40 is connected to an alternating current power source such as a commercial power source, the voltage applicator 40 includes an AC/DC converter, for example. The voltage applicator 40 may be an electric power type power source, for example. In the electric power type power source, the voltage applied between the anode 4a and the cathode 4b and the current flowing between the anode 4a and the cathode 4b are adjusted such that the power supplied to the water electrolysis device 5 becomes a predetermined set value.

With the above configuration, the water electrolysis device 5 can exhibit high durability.

(Appendix)

From the above description, the following techniques are disclosed.

(Technique 1)

An electrode for water electrolysis cell, the electrode including:

a conductive base including a transition metal;
a first layer including two or more transition metals and oxygen; and
a second layer including a layered double hydroxide including two or more transition metals, wherein
the first layer is disposed between the conductive base and the second layer in a thickness direction of the first layer,
the first layer includes a first transition metal that is the same as the transition metal included in the conductive base, and a second transition metal that is the same as the transition metal included in the second layer and different from the first transition metal; and
the first transition metal exists in the first layer at a concentration higher than a concentration of the first transition metal in the second layer.

(Technique 2)

The electrode according to Technique 1, wherein

The conductive base has a porous structure.

(Technique 3)

The electrode according to Technique 1 or 2, wherein
the first layer has a thickness of 10 nm or less.

(Technique 4)

The electrode according to any one of Techniques 1 to 3, wherein
the second layer has a thickness of 35 nm or more.

(Technique 5)

The electrode according to any one of Techniques 1 to 4, wherein
the second layer includes a chelating agent.

(Technique 6)

The electrode according to Technique 5, wherein
the chelating agent includes at least one selected from the group consisting of acetylacetone and a citrate.

(Technique 7)

The electrode according to any one of Techniques 1 to 6, wherein

the first transition metal is Ni, and
the second transition metal is a transition metal selected from the group consisting of V, Cr, Mn, Fe, Co, Cu, W, and Ru.

(Technique 8)

The electrode according to Technique 7, wherein
the second transition metal is Fe.

(Technique 9)

A water electrolysis cell including:

an anode;
a cathode; and
a separator, wherein
at least one selected from the group consisting of the anode and the cathode includes the electrode according to any one of Techniques 1 to 8.

(Technique 10)

A water electrolysis cell including:

an anode;
a cathode; and
an anion-exchange membrane, wherein
at least one selected from the group consisting of the anode and the cathode includes the electrode according to any one of Techniques 1 to 8.

(Technique 11)

A water electrolysis device including:

a water electrolysis cells according to Technique 9 or 10; and
a voltage applicator configured to apply a voltage between the cathode and the anode.

(Technique 12)

A method for manufacturing an electrode for water electrolysis cell, the method including:

promoting mixing of a solution in which a conductive base including a first transition metal is immersed, the solution including a chloride ion and a second transition metal different from the first transition metal; and
forming a layer including a layered double hydroxide including the second transition metal and a third transition metal different from the second transition metal on the conductive base.

(Technique 13)

The method according to Technique 12, wherein
the solution further includes the third transition metal and a chelating agent.

(Technique 14)

The method according to Technique 12, wherein

the third transition metal is that is the same transition metal as the first transition metal, and
the solution further includes a chelating agent.

(Technique 15)

The method according to any one of Techniques 12 to 14, wherein
the solution is adjusted to be alkaline to form a layer including the layered double hydroxide.

(Technique 16)

The method according to any one of Techniques 12 to 15, wherein

the first transition metal is Ni, and
the second transition metal is a transition metal selected from the group consisting of V, Cr, Mn, Fe, Co, Cu, W, and Ru.

(Technique 17)

The method according to Technique 16, wherein

the second transition metal is Fe, and
a molar ratio of a content of Fe ions to a content of Ni in the conductive base is 0.75 or less.

(Technique 18)

The method according to Technique 17, wherein
the molar ratio is in a range of 0.05 to 0.25.

(Technique 19)

The method according to Technique 16, wherein

the second transition metal is Fe, and
a value obtained by dividing a content of Fe ions on a molar basis by a surface area of the conductive base is 0.29 mmol/cm$^2$ or less.

(Technique 20)

The method according to Technique 19, wherein
the value is in a range of 0.01 mmol/cm$^2$ to 0.1 mmol/cm$^2$.

(Technique 21)

The method according to Technique 13 or 14, wherein
the chelating agent includes at least one selected from the group consisting of acetylacetone and a citrate.

Examples

The present disclosure is further explained in detail by referring to Examples. The following Examples demonstrate a part of the present disclosure, and the present disclosure is not limited to the Examples.

(Example 1)

A mixed solvent was prepared by mixing 6.688 milliliters (mL) of water and 10.032 mL of ethanol. The ethanol was a product purchased from FUJIFILM Wako Pure Chemical Corporation. In the mixed solvent, a volume ratio of the water to the ethanol was 2:3. In this mixed solvent, 0.5685 g of nickel chloride hexahydrate and 0.3233 g of iron chloride hexahydrate were dissolved to prepare a solution. The nickel chloride hexahydrate and the iron chloride hexahydrate were products purchased from FUJIFILM Wako Pure Chemical Corporation. To this solution, 0.113 mL of acetylacetone (ACAC) as a chelating agent was added to obtain a chelating agent solution. The ACAC was a product purchased from Sigma-Aldrich Corporation. An amount of substance of the ACAC in the chelating agent solution was 1/3.25 of a total amount of substance of Ni ions and Fe ions. The chelating agent solution was acidic.
Five Ni meshes manufactured by Nilaco Corporation were washed with acetone for 10 minutes and then washed with a 1M HCl aqueous solution for 10 minutes for degreasing the Ni meshes and removing impurities. The Ni meshes each had a wire diameter of 0.1 mm, the number of meshes of a Ni mesh was 60, and each Ni mesh was shaped circular with a diameter of 15 mm in a plan view. The total weight of the five Ni meshes was 0.281 g. Next, the Ni meshes were washed with water and dried to complete the washing treatment of the Ni mesh.
After completion of the washing process, the Ni meshes were then immersed in the chelating agent solution described above. In this state, the chelating agent solution including the Ni meshes was shaken and stirred at 25°C for 24 hours. At this time, the outermost surface of the Ni mesh was etched in accordance with the reaction in the above Formula (2). In this case, a molar ratio of the Fe ion content to the Ni content in the Ni mesh was 0.25. In addition, a value obtained by dividing the content of the Fe ions on a molar basis by the surface area of the Ni mesh was 0.0942 millimoles (mmol)/cm$^2$. The surface area of the Ni mesh was determined by taking into account the geometric shape of the Ni mesh based on the wire diameter, the mesh count and the diameter.
Next, 1.216 mL of propylene oxide (POX) as a pH booster was added to the chelating agent solution. The amount of POX added was adjusted such that a ratio of an amount of substance of the POX to an amount of substance of the chloride ions in the mixed solution was 2. The resulting mixed solution was shaken and stirred at 25°C for 72 hours. It is understood that during the shaking and stirring of the mixed solution, the POX gradually captured the hydrogen ions in the mixed solution, and that the pH of the mixed solution gradually increased and became alkaline. After 72 hours of shaking and stirring, the Ni meshes were collected, and the Ni meshes was washed with water and dried. In this way, the electrode according to Example 1 was obtained.

(Example 2)

An electrode according to Example 2 was produced in the same way as in Example 1, except for the following points. In preparing a mixed solvent, 0.535 mL of water and 0.803 mL of ethanol were mixed. In the mixed solvent, a volume ratio of the water to the ethanol was 2:3. The amount of nickel chloride hexahydrate dissolved in the mixed solvent was 0.0455 g, and the amount of iron chloride hexahydrate dissolved in the mixed solvent was 0.0259 g. The amount of the ACAC added in the preparation of the chelating agent solution was 0.009 mL, and the amount of substance of the ACAC in the chelating agent solution was 1/3.25 of a total amount of substance of Ni ions and Fe ions. Two Ni meshes were used, and the total mass of the two Ni meshes was 0.112 g. The molar ratio of the content of Fe ions to the content of Ni in the Ni meshes during the shaking and stirring of the chelating agent solution including the Ni meshes was 0.05. In addition, a value obtained by dividing the content of Fe ions on a molar basis by the surface area of the Ni meshes was 0.0188 mmol/cm$^2$.

(Example 3)

An electrode according to Example 3 was prepared in the same way as Example 1, except for the following points. In preparing a mixed solvent, 6.900 mL of water and 10.351 mL of ethanol were mixed. In the mixed solvent, a volume ratio of the water to the ethanol was 2:3. The amount of nickel chloride hexahydrate dissolved in the mixed solvent was 5.8654 g, and the amount of iron chloride hexahydrate dissolved in the mixed solvent was 3.3351 g. The amount of the ACAC added in the preparation of the chelating agent solution was 1.164 mL, and the amount of substance of the ACAC in the chelating agent solution was 1/3.25 of the total amount of substance of Ni ions and Fe ions. Four Ni meshes were used, and the total mass of the four Ni meshes was 0.96 g. Each Ni mesh was a square with a side length of 20 mm in a plan view. The amount of the POX added to the chelating agent solution was 12.545 mL. A molar ratio of the content of Fe ions to the content of Ni in the Ni mesh during the shaking and stirring of the chelating agent solution including the Ni mesh was 0.75. In addition, a value obtained by dividing the content of Fe ions on a molar basis by the surface area of the Ni mesh was 0.2844 mmol/cm$^2$. An amount of the POX added was adjusted such that the ratio of the amount of substance of the POX to the amount of substance of the chloride ions in the mixed solution of the chelating agent solution and the POX would be 2.

(Comparative Example 1)

A mixed solvent was prepared by mixing 6.900 mL of water and 10.351 mL of ethanol. The ethanol was a product purchased from FUJIFILM Wako Pure Chemical Corporation. In the mixed solvent, a volume ratio of the water to the ethanol was 2:3. In this mixed solvent, 5.8654 g of nickel chloride hexahydrate and 3.3351 g of iron chloride hexahydrate were dissolved to prepare a solution. The nickel chloride hexahydrate and the iron chloride hexahydrate were products purchased from FUJIFILM Wako Pure Chemical Corporation. To this solution, 1.164 mL of acetylacetone (ACAC) as a chelating agent was added to obtain a chelating agent solution. The ACAC was a product purchased from Sigma-Aldrich Corporation. The amount of substance of the ACAC in the chelating agent solution was 1/3.25 of the total amount of substance of the Ni ions and the Fe ions. The pH of the chelating agent solution was 1.

One Ni mesh manufactured by Nilaco Corporation was washed with acetone for 10 minutes and then washed with a 1 M HCl aqueous solution for 10 minutes for degreasing the Ni mesh and removing impurities. The Ni mesh had a wire diameter of 0.1 mm, the number of meshes of the Ni mesh was 60, and the Ni mesh was a square with a side length of 20 mm in a plan view. The weight of the Ni mesh was 0.25 g. Next, the Ni mesh was washed with water and dried to complete the washing process for the Ni mesh.

After completion of the washing process, the Ni mesh was then immersed in the chelating agent solution. In this state, the chelating agent solution including the Ni mesh was shaken and stirred at 25°C for 24 hours. At this time, in accordance with the reaction in the above Formula (2), the Ni mesh was entirely etched and dissolved. As a result, no evaluable electrode was obtained in Comparative Example 1. The molar ratio of the content of Fe ions to the content of Ni in the Ni mesh was 2.9. Further, a value obtained by dividing the content of Fe ions on a molar basis by the surface area of the Ni mesh was 1.0919 mmol/cm$^2$.

(Comparative Example 2)

Five Ni meshes were used as the electrodes according to Comparative Example 2, after completion of washing in the same way as in Example 1.

(Comparative Example 3)

An electrode according to Comparative Example 3 was prepared in the same way as in Example 1, except for the following points. A Ni mesh after completion of the washing process was placed in the aforementioned chelating agent solution, and immediately thereafter, POX was added to the chelating agent solution. In other words, in Comparative Example 3, the chelating agent solution including the Ni mesh was not shaken or stirred before the addition of POX.

[Identification of electrode structure and morphological observation]

Samples for morphological observation were picked up and processed using a focused ion beam (FIB) system (FB-2200 manufactured by Hitachi High-Technologies Corporation). Next, the samples for morphological observation were sliced using FIB NX5000 manufactured by Hitachi High-Tech Science. The structure of the electrode according to each Example and each Comparative Example was identified, and the morphology of the electrode was observed, by performing a cross-sectional observation and an electron beam diffraction of the thus obtained samples, using a transmission electron microscope (TEM) JEM-F200 manufactured by JEOL Ltd. In this way, the states of the LDH in the electrodes according to Examples and Comparative Examples were evaluated.

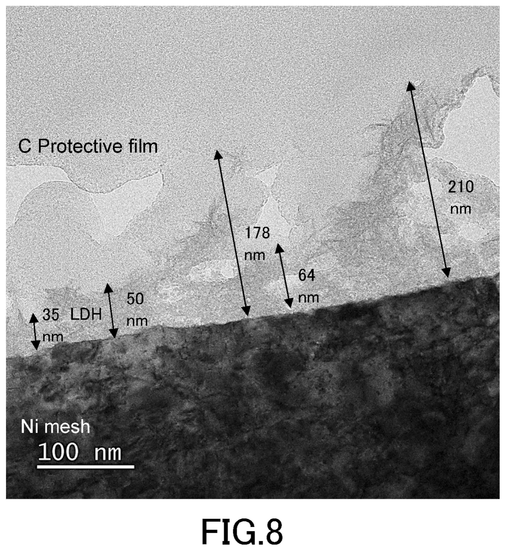

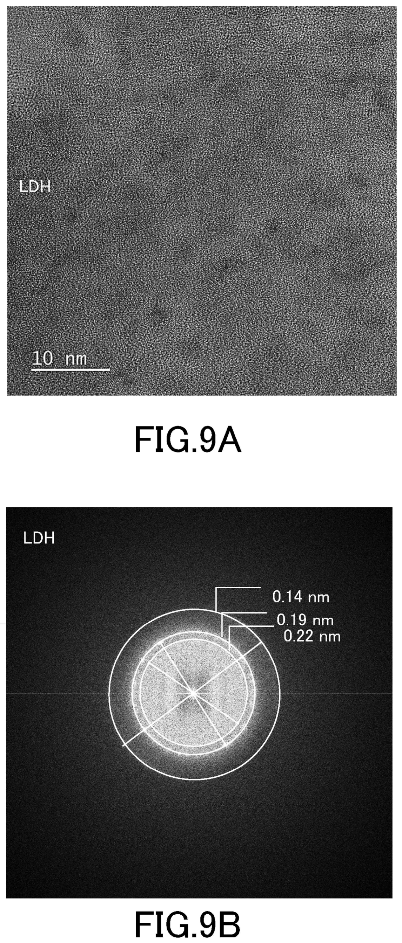

FIG. 8 is a TEM image of the electrode according to Example 1. FIG. 9A is a TEM image of the part of the electrode, where electron beam diffraction results were obtained according to Example 1. FIG. 9B is an electron beam diffraction image obtained by TEM for the part of the electrode shown in FIG. 9A. As shown in FIG. 8, it is understood that a predetermined layer is formed on the surface of the Ni mesh. This layer had a thickness of 35 nm or more. As shown in FIG. 9A and FIG. 9B, in electron diffraction of this layer, LDH-derived lattice spacings of 0.14 nm, 0.19 nm, and 0.22 nm were observed, and diffraction interference fringes consistent with (113), (015), and (012) were confirmed, respectively. Thus, it was confirmed that a layer including the LDH was formed on the Ni mesh surface.

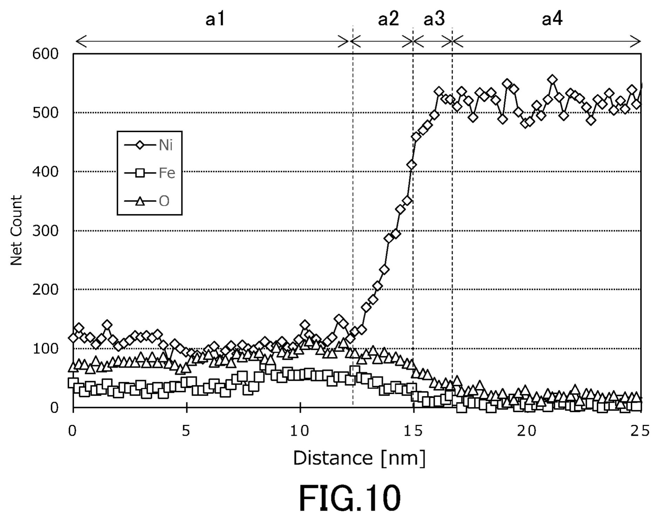

A TEM-EDX line analysis was performed from the layer including the LDH to the Ni mesh of the electrode according to Example 1. FIG. 10 is a graph showing the results of the TEM-EDX line analysis of the electrode according to Example 1. In FIG. 10, the vertical axis shows the Net counts of Fe, O, and Ni, and the horizontal axis shows the distance from the specific point of the layer including LDH where the line analysis was started. In FIG. 10, focusing on the Net count of Ni, it is understood that there is a point where the Net count begins to rise steeply, and it has reached the region of the interface between the base and the layer including the LDH as the line analysis proceeds. In the range corresponding to a distance of about 5 nm from that point, the Net count of Ni rises and reaches the saturation point. In this range, focusing on the Net count of Fe, it is understood that the Net count gradually decreases in the range corresponding to the distance of 4 nm. This indicates that there is a 4 nm layer where Fe diffuses. On the other hand, focusing on the oxygen spectrum, it is understood that the Net count gradually decreases in the range corresponding to the distance of 5 nm. Therefore, it is understood that Fe diffuses in the region of the interface between the layer including LDH and the base, and that a layer with a thickness of 4 nm including Ni, Fe, and oxygen and a layer with a thickness of about 1 nm including Ni and oxygen are present continuously. The part corresponding to a distance equivalent to or more than the distance of the saturation point of the increase in Net count for Ni portion is considered to be the Ni mesh. Considering these results comprehensively, in the electrode according to Example 1, a layer a1 including the LDH that includes Ni and Fe, a layer a2 that includes Ni, Fe and oxygen, a natural oxide film a3 of Ni, and a Ni mesh a4 are present in this order.

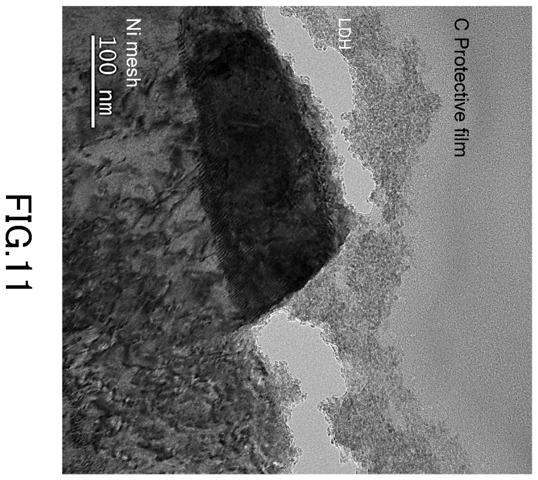

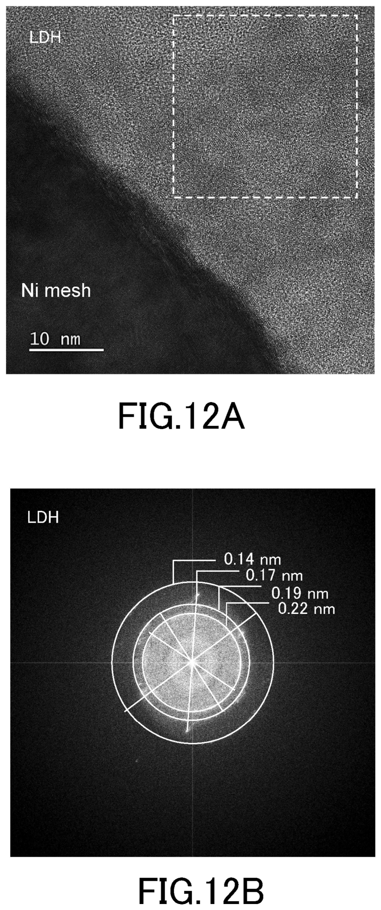

FIG. 11 is a TEM image of an electrode according to Comparative Example 3. FIG. 12A is a TEM image showing a part in the electrode according to Comparative Example 3, for which a result of an electron diffraction analysis was obtained. FIG. 12B is an electron diffraction image obtained by TEM for the part of the electrode shown in FIG. 12A. FIG. 12B shows an electron diffraction result obtained for the region indicated by the white broken line in FIG. 12A. As shown in FIG. 11, it is understood that an LDH is present on the surface of a part of the Ni mesh in the electrode according to Comparative Example 3. Meanwhile, in the electrode according to Comparative Example 3, voids are created between the LDH and the Ni mesh. It is considered that in Comparative Example 3, the reaction represented by the above Formula (2) was unlikely to occur, the Ni source for LDH synthesis was insufficient, and an LDH synthesis was not sufficiently performed. The following is also possible: since the reaction of formula (2) did not occur sufficiently, the formation of an intermediate layer containing Ni, Fe, and oxygen due to the diffusion of Fe was difficult to occur, and LDH was not firmly fixed to the Ni mesh. As a result, it seems that numerous voids were generated between the LDH and the Ni mesh.

As shown in FIG. 12A and 12B, the LDH -derived lattice spacing of 0.14 nm, 0.17 nm, 0.19 nm, and 0.22 nm of the LDH were observed, and diffraction interference fringes consistent with (113), (110), (015), and (012) were confirmed respectively. And presence of the LDH on the Ni mesh surface was confirmed.

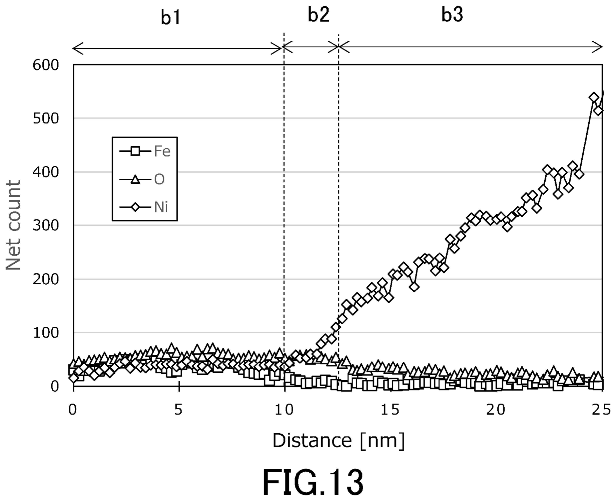

A TEM-EDX line analysis was performed from the layer including the LDH to the Ni mesh of the electrode according to Comparative Example 3. FIG. 13 is a graph showing the results of the TEM-EDX line analysis of the electrode according to Comparative Example 3. In FIG. 13, the vertical axis shows the Net counts of Fe, O, and Ni, and the horizontal axis shows the distance from the specific point of the layer including the LDH where the line analysis was started. In FIG. 13, focusing on the Net count of Ni, it is understood that there is a point where the Net count begins to rise steeply, and it has reached the region of the interface between the base and the layer including the LDH with the line analysis proceeding. The Ni Net count continues to increase from that point. Focusing on the Net count of Fe in this region, unlike the electrode according to Example 1, a layer including Ni, Fe and oxygen cannot be confirmed. It is understood that in the electrode according to Example 1, a layer b2 (natural oxide film) including Ni and oxygen, corresponding to the distance of about 2 nm is provided between the base b3 and the layer b1 including the LDH. This result is considered also relating to the numbers of voids observed between the Ni mesh and the LDH confirmed in FIG. 11.

[Evaluation of electrode]

The oxygen evolution reaction (OER) overpotentials of the electrode according to the respective Examples and Comparative Examples 2 and 3 were evaluated. The following equipment was used for the measurements: a VersaSTAT4, potentiostat manufactured by Princeton Applied Research; an alkali sample vial (200 ml) manufactured by BAS Inc.; a Teflon (registered trademark) cap (200 ml) manufactured by BAS Inc.; and a plate electrode AE-2 manufactured by EC FRONTIER CO., LTD., as a working electrode jig. The electrodes as working electrodes according to the respective Examples and Comparative Examples 2 and 3 were fixed to the jig. As the counter electrode, a double platinum wire counter electrode (D.6.0305.200J) manufactured by Metrohm AG was used. The current derived from the anode reaction of the water electrolysis cell was measured using the three-electrode method under the following measurement conditions. The anode reaction is the oxygen evolution reaction.

(Measurement conditions)
Solution: 1M KOH solution
Potential relative to reversible hydrogen electrode (RHE): 1.0 V to 1.7 V
Number of cycles: 5 cycles
Rate of potential sweep: 10 mV/sec
Temperature: 25°C

The OER overpotential was determined by subtracting a theoretical potential of 1.229 V required to drive the oxygen evolution reaction from the voltage corresponding to the current density of 10 mA/cm$^2$ in the fifth cycle. The results are shown in Table 1. Table 1 shows a molar ratio of the Fe ion content to the Ni content in the Ni mesh in production of an electrode, as well as a value obtained by dividing a content of the Fe ion on a molar basis by the surface area of the Ni mesh. Table 1 also shows whether the chelating agent solution including the Ni mesh was shaken/stirred before the addition of POX, and whether the electrode was successfully produced.

From the measurement results for evaluation of the OER overpotential, the coverage of the layer including the LDH to the surface of the Ni mesh was determined based on the following Formula (3). The results are shown in Table 1. In Formula (3), $S_{NiOx}$ is an integral value of the current density at a potential in a range of 1.38 V to 1.48 V, and $S_{Ni}$ is an integral value of the current density at a potential in a range of 1.35 V to 1.38 V. The peak in the current density at potentials in a range of 1.38 V to 1.48 V is a peak derived from the hydroxides of iron and nickel, while the peak in the current density in a range of 1.35 V to 1.38 V is a peak derived from pure nickel.

$$\text{Coverage} = S_{NiOx}/(S_{Ni} + S_{NiOx}) \times 100 \qquad \text{Formula (3)}$$

As shown in Table 1, the OER overpotentials of the electrodes according to Examples 1 to 3 are lower than the OER overpotential of the electrode according to Comparative Example 2, whereby it is understood that an electrode including a layer including the LDH has high electrode activity. In the meantime, comparing each Example with Comparative Example 1, if the molar ratio of the content of the Fe ions to the content of Ni in the Ni mesh is high, a chemical reaction to dissolve the Ni becomes intense, and the entire Ni mesh dissolves, making it impossible to produce an electrode. For this reason, it is understood that the molar ratio of the content of Fe ions to the content of Ni in the Ni mesh is desirably 0.75 or less. In addition, it is understood that the value obtained by dividing the content of Fe ions on a molar basis by the surface area of the Ni mesh is desirably 0.29 mmol/cm$^2$ or less.

As shown in Table 1, the OER overpotentials of the electrodes according to Examples 1 and 2 are particularly low. Therefore, from the viewpoint of electrode activity, it was suggested that the molar ratio of the content of Fe ions to the content of Ni included in the Ni mesh be more desirably in a range of 0.05 to 0.25. In addition, it was suggested that the value obtained by dividing the content of Fe ions on a molar basis by the surface area of the Ni mesh be more desirably in a range of 0.01 mmol/cm$^2$ to 0.1 mmol/cm$^2$.

[Durability evaluation of electrodes]

The OER overpotentials of the electrodes according to of Example 1 and Comparative Examples 2 and 3 were measured for 1000 cycles to evaluate the durability of the electrodes. The following equipment was used for the measurements: a VersaSTAT4 potentiostat manufactured by Princeton Applied Research; an alkali sample vial (200 ml) manufactured by BAS Inc.; a Teflon (registered trademark) cap (200 ml) manufactured by BAS Inc.; and a plate electrode AE-2 manufactured by EC FRONTIER CO., LTD. as the working electrode jig. The electrodes as working electrodes according to Example 1 and Comparative Examples 2 and 3 were fixed to the jig. As the counter electrode, a double platinum wire counter electrode (D.6.0305.200J) manufactured by Metrohm AG was used. The current derived from the anode reaction of the water electrolysis cell was measured using the three-electrode method under the following measurement conditions. The anode reaction is the oxygen evolution reaction.

(Measurement conditions)
Solution: 1M KOH solution
Potential relative to RHE: 1.0 V to 1.7 V
Maximum number of cycles: 1000 cycles
Rate of potential sweep: 100 mV/sec
Temperature: 25°C

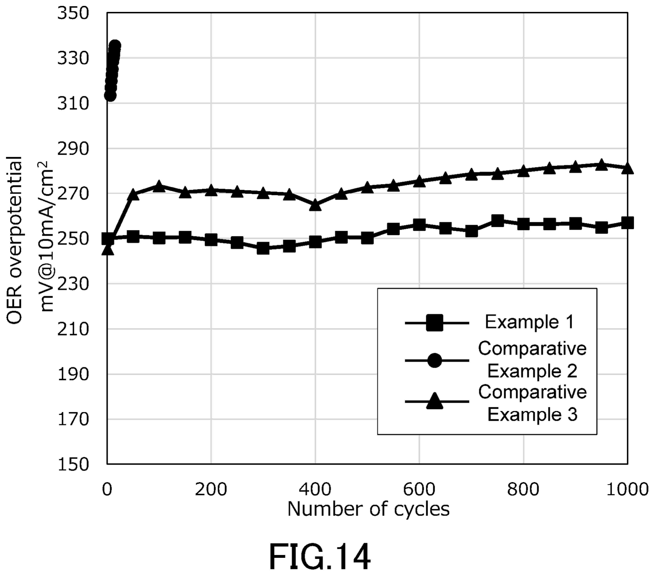

FIG. 14 is a graph showing a relation between OER overpotential and the number of cycles for the electrodes according to Example 1 and the electrodes according to Comparative Examples 2 and 3. **In** this graph, the OER overpotential for every 50 cycles is shown. Each cycle simulates the operation and suspension of water electrolysis.

Comparing Example 1 with Comparative Example 2 and Comparative Example 3, the OER overpotential of the electrode according to Example 1 does not rise by the 50th cycle. On the other hand, the OER overpotentials of the electrodes according to Comparative Examples 2 and 3 rise before the 50th cycle. Therefore, from the viewpoint of electrode durability, it is apparently important to promote mixing of the chelating agent solution with the Ni mesh immersed therein by shaking and stirring the chelating agent solution with the Ni mesh, before adjusting the solution to be alkaline.

Many modifications and other embodiments of the present disclosure will be apparent to those skilled in the art with reference to the above description. Therefore, the above description should be interpreted only as an example, and is provided for the purpose of teaching those skilled in the art the best manner to carry out the present disclosure. The operating conditions, the composition, the structure and/or the function can be substantially modified without departing from the spirit of the present disclosure.

[Table 1]

| | Molar ratio of Fe ion content to Ni content in Ni mesh | Fe ion content / Ni mesh surface area [mmol/cm$^2$] | Shaking and stirring chelating agent solution including Ni mesh | Electrode production | Coverage [%] | OER overpotential [mV] |
|---|---|---|---|---|---|---|
| Example 1 | 0.25 | 0.0942 | Performed | Possible | 99.7 | 253 |
| Example 2 | 0.05 | 0.0188 | Performed | Possible | 99.4 | 244 |
| Example 3 | 0.75 | 0.2844 | Performed | Possible | - | 318 |
| Comparative Example 1 | 2.9 | 1.0919 | Performed | Impossible | - | - |
| Comparative Example 2 | - | - | Not performed | Possible | - | 352 |
| Comparative Example 3 | 0.25 | 0.0942 | Not performed | Possible | - | 272 |

INDUSTRIAL APPLICABILITY

An electrode for water electrolysis cell of the present disclosure can be used as an anode or a cathode for water electrolysis.

**Claims**

1. An electrode for water electrolysis cell, comprising:

   a conductive base comprising a transition metal;
   a first layer comprising two or more transition metals and oxygen; and
   a second layer comprising a layered double hydroxide including two or more transition metals, wherein
   the first layer is disposed between the conductive base and the second layer in a thickness direction of the first layer,
   the first layer includes a first transition metal that is the same metal as the transition metal included in the conductive base and a second transition metal that is the same metal as the transition metal included in the second layer and different from the first transition metal; and
   the first transition metal exists in the first layer at a concentration higher than a concentration of the first transition metal in the second layer.

2. The electrode for water electrolysis cell according to claim 1, wherein the conductive base has a porous structure.

3. The electrode for water electrolysis cell according to claim 1 or 2, wherein

the first layer has a thickness of 10 nm or less.

4. The electrode for water electrolysis cell according to any one of claims 1 to 3, wherein
the second layer has a thickness of 35 nm or more.

5. The electrode for water electrolysis cell according to any one of claims 1 to 4, wherein
the second layer includes a chelating agent.

6. The electrode for water electrolysis cell according to claim 5, wherein
the chelating agent comprises at least one selected from the group consisting of acetylacetone and a citrate.

7. The electrode for water electrolysis cell according to any one of claims 1 to 6, wherein

the first transition metal is Ni, and
the second transition metal is a transition metal selected from the group consisting of V, Cr, Mn, Fe, Co, Cu, W, and Ru.

8. The electrode for water electrolysis cell according to claim 7, wherein
the second transition metal is Fe.

9. A water electrolysis cell comprising:

an anode;
a cathode; and
a separator, wherein
at least one selected from the group consisting of the anode and the cathode comprises the electrode according to any one of claims 1 to 8.

10. A water electrolysis cell comprising:

an anode;
a cathode; and
an anion-exchange membrane, wherein
at least one selected from the group consisting of the anode and the cathode comprises the electrode according to any one of claims 1 to 8.

11. A water electrolysis device comprising:

the water electrolysis cell according to claim 9 or 10; and
a voltage applicator configured to apply a voltage between the cathode and the anode.

12. A method for manufacturing an electrode for water electrolysis cell, comprising:

promoting mixing of a solution in which a conductive base comprising a first transition metal is immersed, where the solution includes a chloride ion and a second transition metal different from the first transition metal; and
forming a layer including a layered double hydroxide including the second transition metal and a third transition metal different from the second transition metal on a surface of the conductive base.

13. The method according to claim 12, wherein
the solution further includes the third transition metal and a chelating agent.

14. The method according to claim 12, wherein

the third transition metal is a transition metal that is the same metal as the first transition metal, and
the solution further includes a chelating agent.

15. The method according to any one of claims 12 to 14, wherein
the layer including the layered double hydroxide is formed by adjusting the solution to be alkaline.

**16.** The method according to any one of claims 12 to 15, wherein

the first transition metal is Ni, and
the second transition metal is a transition metal selected from the group consisting of V, Cr, Mn, Fe, Co, Cu, W, and Ru.

**17.** The method according to claim 16, wherein

the second transition metal is Fe, and
a molar ratio of a content of Fe ion to a content of Ni included in the conductive base is 0.75 or less.

**18.** The method according to claim 17, wherein
the molar ratio is in a range of 0.05 to 0.25.

**19.** The method according to claim 16, wherein

the second transition metal is Fe, and
a value obtained by dividing the content of Fe ion on a molar basis by a surface area of the conductive base is 0.29 $mmol/cm^2$ or less.

**20.** The method according to claim 19, wherein
the value is in a range of 0.01 $mmol/cm^2$ to 0.1 $mmol/cm^2$.

**21.** The method according to claim 13 or 14, wherein
the chelating agent comprises at least one selected from the group consisting of acetylacetone and a citrate.

1

10 11 12

FIG.1

20

21

22

21

⊘ : $M_1^{2+}$    ● : $M_2^{3+}$    ○ : $OH^-$

▥ : $A^{n-}$    ⬤ : $H_2O$

FIG.2

FIG.3

FIG.4

FIG.5

4

4k ⎫ 4b
4j ⎭
4p
4m ⎫ 4a
4n ⎭

FIG.6A

1

12   10

11

FIG.6B

FIG.7

FIG.8

FIG.9A

FIG.9B

FIG.10

FIG.11

FIG.12A

FIG.12B

FIG.13

FIG.14

**EP 4 733 443 A1**

## INTERNATIONAL SEARCH REPORT

| | International application No. |
|---|---|
| | **PCT/JP2023/023431** |

| A. | CLASSIFICATION OF SUBJECT MATTER |
|---|---|

*C25B 9/00*(2021.01)i; *C25B 1/04*(2021.01)i; *C25B 11/052*(2021.01)i
FI: C25B9/00 A; C25B1/04; C25B11/052

According to International Patent Classification (IPC) or to both national classification and IPC

| B. | FIELDS SEARCHED |
|---|---|

Minimum documentation searched (classification system followed by classification symbols)

C25B9/00; C25B1/04; C25B11/052

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT | | |
|---|---|---|---|
| Category* | Citation of document, with indication, where appropriate, of the relevant passages | | Relevant to claim No. |
| X | WO 2022/014377 A1 (PANASONIC INTELLECTUAL PROPERTY MANAGEMENT CO., LTD.) 20 January 2022 (2022-01-20) | | 1, 3-18, 21 |
| | example 1, claims, paragraphs [0064], [0067], [0081]-[0084], [0094] | | |
| Y | | | 1-17, 19, 21 |
| A | | | 20 |
| X | WO 2022/071127 A1 (PANASONIC INTELLECTUAL PROPERTY MANAGEMENT CO., LTD.) 07 April 2022 (2022-04-07) | | 1-16, 21 |
| | paragraphs [0069]-[0070], [0081], example 1, claims | | |
| Y | | | 1-17, 19,21 |
| A | | | 18,20 |
| X | CN 114959791 A (HEBEI UNIVERSITY OF TECHNOLOGY) 30 August 2022 (2022-08-30) | | 1-4, 12 |
| | example 1, fig. 3, claims, paragraph [0004] | | |
| Y | | | 5-6, 9-11, 13-15, 21 |
| A | | | 7-8, 16-20 |

☑ Further documents are listed in the continuation of Box C.     ☑ See patent family annex.

| | |
|---|---|
| \*   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **09 August 2023** | **29 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2023/023431** |

**C. DOCUMENTS CONSIDERED TO BE RELEVANT**

| Category* | Citation of document, with indication, where appropriate, of the relevant passages | Relevant to claim No. |
| --- | --- | --- |
| Y | CN 113926456 A (HANGZHOU NORMAL UNIVERSITY) 14 January 2022 (2022-01-14) examples, paragraph [0014] | 1-4, 7-12, 16-17, 19 |
| A | | 5-6, 13-15, 18, 20-21 |

Form PCT/ISA/210 (second sheet) (January 2015)

### INTERNATIONAL SEARCH REPORT
**Information on patent family members**

International application No.

**PCT/JP2023/023431**

| Patent document cited in search report | | | Publication date (day/month/year) | Patent family member(s) | | | Publication date (day/month/year) |
|---|---|---|---|---|---|---|---|
| WO | 2022/014377 | A1 | 20 January 2022 | US | 2023/0121007 | A1 | |
| | | | | example 1, claims, paragraphs [0086], [0090], [0105]-[0108], [0118] | | | |
| | | | | CN | 115812007 | A | |
| WO | 2022/071127 | A1 | 07 April 2022 | (Family: none) | | | |
| CN | 114959791 | A | 30 August 2022 | (Family: none) | | | |
| CN | 113926456 | A | 14 January 2022 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020012171 A

- JP 2021139027 A

**Non-patent literature cited in the description**

- **SEYEONG LEE et al.** Operational durability of three-dimensional Ni-Fe layered double hydroxide electrocatalyst for water oxidation. *ElectrochimicaActa*, 2019, vol. 315, 94-101

- **JIANDE CHEN et al.** Interfacial Interaction between FeOOH and Ni-Fe LDH to Modulate the Local Electronic Structure for Enhanced OER Electrocatalysis. *ACS Catalysis*, 2018, vol. 8, 11342-11351